# EUROPEAN PATENT APPLICATION

(11) **EP 1 430 772 A1**
(43) Date of publication of application: **23.06.2004**
(21) Application number: 03079127.1
(22) Date of filing: 19.12.2003
(51) Int. Cl.: A01K 1/02

(54) **Farrowing crate for sows**

(30) Priority: 20.12.2002 NL 1022216
(71) Applicant: Hendriks, Leonardus Martinus Anthonius, 5844 AR Stevensbeek (NL)
(72) Inventor: Hendriks, Leonardus Martinus Anthonius, 5844 AR Stevensbeek (NL)
(74) Representative: Lips, Hendrik Jan George, Ir.

(57) **Abstract**

The invention relates to a farrowing crate (1) for sows comprising a fixed first portion (2) and a second portion (3) being pivotably connected to said first portion through pivot points (4,5), said parts being substantially comprised of tubular frames, said first portion and second portion substantially having a lying U-shape and forming a closed rectangular box in the closed position. The pivot points are mounted at the inside of the fixed first portion in such a way that the second portion in its raised position can be received within the first portion.

## Description

The present invention relates to a farrowing crate for sows comprising a first and a second portion, each mainly composed of a tube frame, with pivoting means for being able to move said first and second portions of said farrowing crate in relation to one another around the pivot axis determined by the pivoting means in order to provide an entrance and an exit for the farrowing crate.

Such farrowing crates are known in various embodiments. For example, one known embodiment comprises two halves generally identical in mirror image which are fixed to a wall or a vertical tube portion through a pivot connection. At the opposite extremity of said box, said halves are connected to one another through releasable coupling members. This embodiment requires relatively much space adjacent the box or between successive boxes in order to allow for making a sufficiently large swing with one of or both box halves for providing access to the box for the sow. In another known embodiment, the complete box serves for being folded-up around a pivoting point at an extremity of the box. This embodiment requires sufficient space in vertical direction, which will not be available in all stables or everywhere in the stables. Furthermore, the force required for folding up the box is definitely not within the legally provided standards in relation to working conditions.

Therefore, the object of the invention is to provide a farrowing crate for sows by which the abovementioned disadvantages are removed.

Accordingly, the invention provides for, that the first portion is fixedly mounted and that the second portion is pivotable in relation to the first portion, said first and second portions substantially having the shape of a lying U and forming a closed rectangular box in the closed position. Preferably, it is further provided for that the second portion can be pivoted around a horizontal pivoting axis in its entirety in relation to the first portion.

With the farrowing crate according to the invention, therefore, only a part of the box is to be pivoted around a horizontal pivot axis, as a result of which the load for the pig farmer can be amply within the standards stated in the working conditions law.

Preferably, further it is provided for, that the pivot points have been provided at a height in relation to the loadbearing floor which is lower than half the height of the second portion, the length of the first portion up to the pivot points being larger than the largest height of the second portion above the horizontal plane extending through the pivot points. By providing for a lowest possible position of the pivot points, the total height with a raised portion can be kept below the lowest ceiling height in every conventional stable. Therefore, there are virtually no limits regarding positioning of the present farrowing crate.

The respectively chosen length and height of first and second portions further allow for that with a second portion raised in vertical position, it will not extend beyond the back side of the first portion. In this way, with said raised portion an entirety as compact as possible and the most space around the opened farrowing crate are achieved. In case of farrowing crates arranged in a row this also allows for sufficient freedom of movement when bringing the sows into the farrowing crates and taking them out. Further, when hosing down the farrowing crates, the floor is easy to reach and the folded-up tube frame can be cleaned very effectively because of the compact construction in particular.

According to a further elaboration, it is preferably provided for that the pivot points are mounted at the inside of the fixed first portion, with the length of the first portion up to the pivot points being greater than the largest height of the second portion above the horizontal plane extending through said pivot points. In this way, in the raised position the second portion will end up standing against the inside of the back side. Preferably, this will be approximately upright. In that position, most of the second portion has already been moved past the pivot points and a stable position is guaranteed.

An additional advantage of this structure is that the part of the second portion which is above the pivot points can be supported against the first, fixed portion. This avoids the risk that the second portion might be bent outwards by the sow. This is relevant since also because of this it is possible to employ a lightweight tube for the second portion and consequently less strength will be required for raising said second portion.

According to a further elaboration it is provided for that a cover comprising one or more tube parts is mounted over at least part of the length of the first portion, in which, seen from above, in horizontal direction there is space between the outer circumference of the cover and the inside of the legs of the lying U-shape of the first portion. The cover, intended as additional limit of the box, is mounted at least over part of said first, fixed portion, since the feeding-trough or manger is also fastened there and the head of the sow is obviously at that side. The space between the cover and the legs of the U-shape of the first portion are intended to offer a passage for the second portion of said farrowing crate when it is raised.

Then, further it is provided for that at least one tube section of the cover is provided with a fastening member for fastening the first portion on a loadbearing floor, with the tube section ending at the rear side of said first portion, the part between the legs of the lying U-shape. In this way, the cover structure is an integral part of the first fixed portion of the farrowing crate as a result of which a sturdier entirety can be obtained.

Preferably, it is provided for that the cover with two tube ends, each one provided with a fastening member, can be fastened to the loadbearing floor, in which the tube ends can be the extremities of one bent length of tube, and in which further tube sections of the cover extending over the first portion are partly situated in another plane than the sections of the tube parts having a fastening member which are situated over the first portion. Such a structure having tube sections extending across an angle in relation to one another realizes a reinforcement of the cover, of the rear wall of the first portion and thus also of the entire first portion.

With the farrowing crate according to the invention it is further possible to adapt the width of the second portion to the size of the sow. To this end, adjusting members are provided, mounted in the tube sections of the part between the two legs of the lying U-shape of the second pivotable portion of the box for allowing adjustment of the legs of the lying U-shape of the second portion at a desired distance in relation to one another. Further, additional adjusting members are provided for enabling adjustment of the pivot points mounted on said first, fixed portion, along the horizontal pivot axis. Such adjusting members are designed in such a way, that the pivot points can be moved from within the first portion to beyond, and vice versa.

As is usual in farrowing crates, inwardly projecting fall brackets are mounted inside the farrowing crate. Such brackets cause the sow to lie down carefully. These fall brackets are mounted pivotably so that they will be folded-up when the sow rises and thus she will not be hindered in her movements. The farrowing crate according to the invention provides means for folding-up the fall brackets when pivoting said second portion upwards in relation to the first portion, said means being designed in such a way, that the fall brackets abut the inside of the second portion before the second portion, seen from above in horizontal direction, will end up in the space between said first portion and the cover mounted over said first portion.

The invention is further explained by way of the example illustrated in the drawing, in which:
- fig. 1: illustrates in perspective a side view of a maternity box;
- fig. 2: illustrates in perspective a side/ rear view of a farrowing crate;
- fig. 3: illustrates in perspective a front view of a farrowing crate;
- fig. 4: illustrates in perspective a side view of a raised farrowing crate;
- fig. 5: illustrates in perspective a rear view of a raised farrowing crate; and
- fig. 6: illustrates in perspective a front view of a raised farrowing crate.

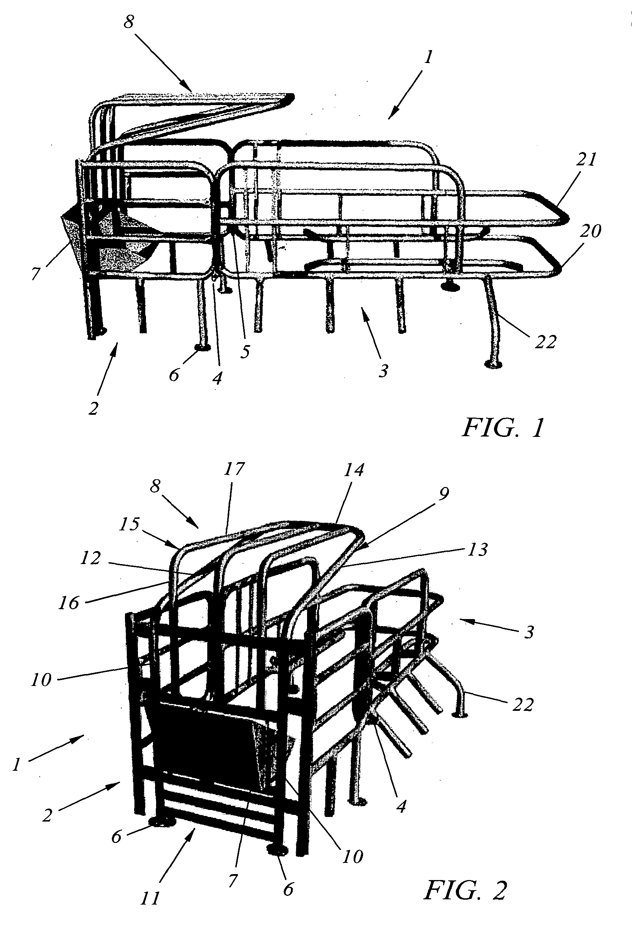

Figs. 1, 2 illustrate a farrowing crate 1 comprising a first portion 2 fixedly mounted on a loadbearing floor and a movable second portion 3 connected to it by means of pivot points 4, 5. First portion 2 is fastened to a loadbearing floor not further indicated in the drawing with four tube bases 6. Instead of employing tube bases 26 the tubes concerned can also be incorporated into the loadbearing floor.

The first portion 2 has a lying U-shape and substantially comprises a tubular frame. A feeding-trough 7 is mounted in a recess in the rear wall. A cover 8 likewise substantially comprising a tubular frame is mounted over the first portion 2 of said farrowing crate 1. The outer limit of the cover 8 is formed of one tubular part 9 having two vertical sections 10 being part of the rear wall 11 of the first portion 2 and having their ends fastened to the loadbearing floor by tube bases 6. Two parallel parts 12, 13 extend obliquely upward from rear wall 11 to above said second portion 3 of the farrowing crate 1 and come together in a collective transverse part 14. Within the outer limits of cover 8, three further tube parts 15 are arranged, each having an upright section 16 and an approximately horizontal section 17 extending up to transverse part 14 of the outer limit tube 9. The offset of said tube parts 9 and 15 in relation to one another provides a rigid cover structure, in which the fixedly mounted extremities of the tube parts 10 additionally provide for a stable rear wall 11.

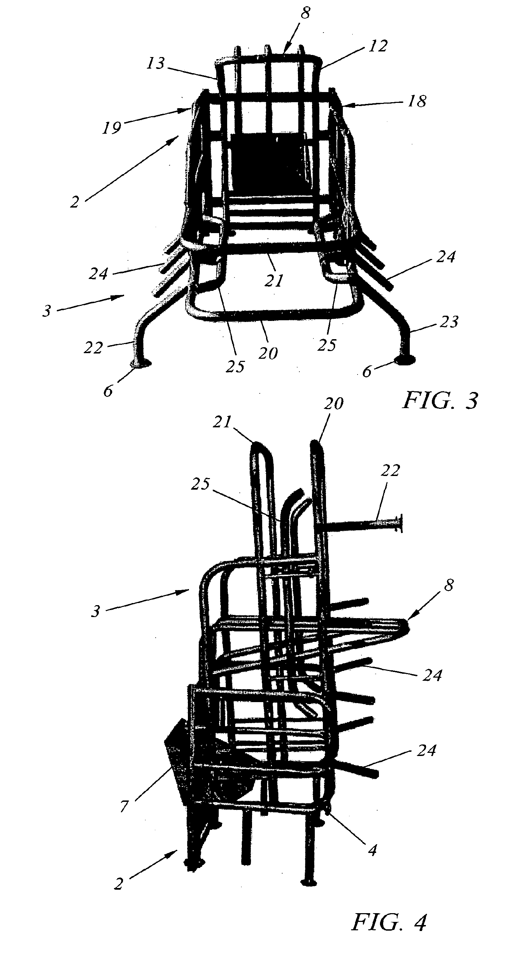

The outer limit 9 of cover 8 and tube parts 12, 13 extending obliquely upward are spaced from the side walls 18, 19 of first portion 2 of the farrowing crate 1, thus providing space for receiving second portion 3 of said farrowing crate 1 in the raised position, see also figs. 4-6.

According to a further elaboration not illustrated in the drawing, the section of the rear wall in which the feeding-trough 7 is mounted can also be designed as a gate pivotable around an approximately vertical axis, with lock-ing means being provided for holding the gate in the locked position in the rear wall and opening it in case of unlocking. Such a gate can be used as additional entrance and exit and further renders the entire feeding-trough 7 properly accessible so that it can e.g. be easily cleaned and/or other work can be done at them.

The second portion 3 of the farrowing crate 1 likewise substantially comprises a tubular frame which, directly connecting to first portion 2, continues at the same height with its side walls 18, 19. At the end, said second portion continues with only the two lower tubes 20, 21 which have been bent to a lying U-shape. The rear side of the sow is situated at this end of the farrowing crate 1, so that there is no risk of breaking out. However, in this way the sow is accessible for e.g performing the necessary veterinary actions.

The second portion 3 bears on the loadbearing floor with two partly laterally projecting tube sections 22, 23 having their extremities provided with tube bases 6. At the sides of the second portion 3, laterally projecting tube sections 24, the "turned-away" sections, are provided in spaced-apart relationship at the lowermost tube 20. These "turned-away" sections 24 allow for that a sow which is lying down will have enough space.

At the inside of the second portion, said lowermost tube 20 also mounts so-called fall brackets 25, which cause a sow to lie down carefully. When the sow gets up, these fall brackets 25 fold upward and the sow will not experience any limitation of movement by these brackets.

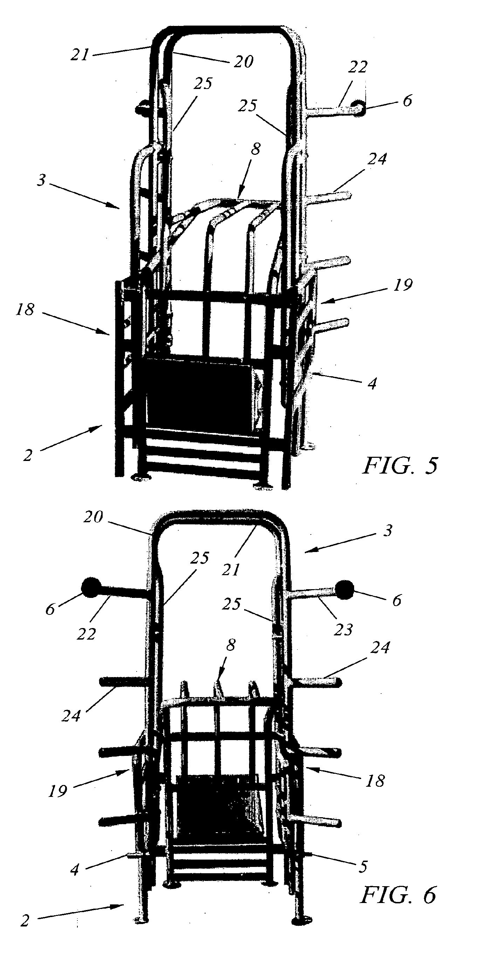

The pivot points 4, 5 are arranged at the level of the lowermost tube 20 of second portion 3, see also figs. 5,6. When raising up said second portion 3, the section above said pivot points will end up between the respective side walls 18, 19 of said first portion 2 and the limits 12, 13 of the cover 8. Although said pivot points could also be mounted even lower, this will preferably not be done, since then one has to take additional measures to provide for the space required for the turned-away sections 24.

In case the second portion 3 of the farrowing crate should be made wider in order to be able to accommodate much bigger sows than usual, adjusting members for widening said second portion 3 can be incorporated at the end of said second portion 3 in the tube parts 20, 21. Such adjusting members can substantially comprise telescopically movable tube sections, which can be secured in any desired position by clamping means. Also, means are provided for enabling said pivot points 4, 5 to be moved outwards across the desired distance.

If one chooses an embodiment of a farrowing crate 1 in which the pivot points 4, 5 are always at the outside of first portion 2, the structure of cover 8 can be adapted to that. The spaces between the side walls 18, 19 and the lateral limits 12, 13 for receiving said second portion 3 in the raised position, can then be omitted. Then the cover structure can also engage the side walls 18, 19.

When raising said second portion 3, the fall brackets 25 should also be folded-up in order to get second portion 3 between the side walls 18, 19 and the lateral limits 12, 13 of the cover 8. This can simply be done by hand, however, it is preferred to provide mechanical means by which on raising said second portion 3 said fall brackets will be folded-up simultaneously.

## Claims

1. Farrowing crate for sows comprising a first and a second portion, each mainly composed of a tube frame, with pivoting means for being able to move said first and second portions of said farrowing crate in relation to one another around the pivot axis determined by the pivoting means in order to provide an entrance and an exit for the farrowing crate, **characterized in that** the first portion is fixedly mounted and that the second portion is pivotable in relation to the first portion, said first and second portions substantially having the shape of a lying U and forming a closed rectangular box in the closed position.

2. Farrowing crate according to claim 1, **characterized in that** the second portion can be pivoted around a horizontal pivoting axis in its entirety in relation to the first portion.

3. Farrowing crate according to claim 2, **characterized in that** the pivot points have been provided at a height in relation to the loadbearing floor which is lower than half the height of the second portion, the length of the first portion up to the pivot points being larger than the largest height of the second portion above the horizontal plane extending through the pivot points.

4. Farrowing crate according to claim 3, **characterized in that** the pivot points are mounted at the inside of the fixed first portion, with the length of the first portion up to the pivot points being greater than the largest height of the second portion above the horizontal plane extending through said pivot points.

5. Farrowing crate according to claim 4, **characterized in that** the pivot points are fastened to upright tube sections being provided with fastening members by which said first portion can be fixed to a loadbearing floor.

6. Farrowing crate according to claims 1-5, **characterized in that** a cover comprising one or more tube parts is mounted over at least part of the length of the first portion, in which, seen from above, in horizontal direction there is space between the outer circumference of the cover and the inside of the legs of the lying U-shape of the first portion.

7. Farrowing crate according to claim 6, **characterized in that** at least one tube section of the cover is provided with a fastening member for fastening the first portion on a loadbearing floor, with the tube section ending at the rear side of said first portion, the part between the legs of the lying U-shape.

8. Farrowing crate according to claim 7, **characterized in that** the cover with two tube ends, each one provided with a fastening member, can be fastened to the loadbearing floor, in which the tube ends can be the extremities of one bent length of tube, and in which further tube sections of the cover extending over the first portion are partly situated in another plane than the sections of the tube parts having a fastening member which are situated over the first portion.

9. Farrowing crate according to claims 1-8, **characterized in that** adjusting members are provided, mounted in the tube sections of the part between the two legs of the lying U-shape of the second pivotable portion of the box for allowing adjustment of the legs of the lying U-shape of the second portion at a desired distance in relation to one another.

10. Farrowing crate according to claim 9, **characterized in that** additional adjusting members are provided for enabling adjustment of the pivot points mounted on said first, fixed portion, along the horizontal pivot axis.

11. Farrowing crate according to claims 1-10, with fall brackets being provided at the inside of said second portion, **characterized in that** means are provided for folding-up the fall brackets when pivoting said second portion upwards in relation to the first portion, said means being designed in such a way, that the fall brackets abut the inside of the second portion before the second portion, seen from above in horizontal direction, will end up in the space between said first portion and the cover mounted over said first portion.

12. Farrowing crate according to one or more of the claims 1-11, **characterized in that** the section of the rear wall in which the feeding-trough is mounted is designed as a gate pivotable around an approximately vertical axis, with lock-ing means being provided for holding the gate in the locked position in the rear wall and opening it in case of unlocking.
